# EUROPEAN PATENT SPECIFICATION

(11) **EP 0 466 172 B1**
(45) Date of publication and mention of the grant of the patent: **14.02.1996**
(21) Application number: 91111627.5
(22) Date of filing: 12.07.1991
(51) Int. Cl.: B41J 13/30, B41J 13/00

(54) **Sheet feed for an image forming apparatus**
Blattzufuhr für Bilderzeugungsgerät
Alimentation en feuilles pour appareil générateur d'images

(30) Priority: 13.07.1990 JP 185621/90
(43) Date of publication of application: 15.01.1992
(73) Proprietor: CANON KABUSHIKI KAISHA, Tokyo (JP)
(72) Inventor: Hiroshima, Koichi, c/o Canon Kabushiki Kaisha, Tokyo (JP); Inoue, Takahiro, c/o Canon Kabushiki Kaisha, Tokyo (JP); Goto, Masahiro, c/o Canon Kabushiki Kaisha, Tokyo (JP); Suwa, Koichi, c/o Canon Kabushiki Kaisha, Tokyo (JP); Tsukida, Shinichi, c/o Canon Kabushiki Kaisha, Tokyo (JP); Kato, Junichi, c/o Canon Kabushiki Kaisha, Tokyo (JP); Ojima, Masaki, c/o Canon Kabushiki Kaisha, Tokyo (JP); Yamada, Hiromichi, c/o Canon Kabushiki Kaisha, Tokyo (JP); Takano, Manabu, c/o Canon Kabushiki Kaisha, Tokyo (JP)
(74) Representative: Pellmann, Hans-Bernd, Dipl.-Ing.

(56) References cited:
- US-A- 4 260 241
- PATENT ABSTRACTS OF JAPAN vol. 14, no. 367 (M-100)9 August 1990 & JP-A-2 131 964 ( KIYOSHI ) 21 May 1990
- PATENT ABSTRACTS OF JAPAN vol. 8, no. 277 (E-285)(1714) 18 December 1984 & JP-A-59 146 261 ( KANEIWA ) 22 August 1984
- PATENT ABSTRACTS OF JAPAN vol. 13, no. 197 (P-868)11 May 1989 & JP-A-1 019 366 ( HARUKAZU ) 23 January 1989
- PATENT ABSTRACTS OF JAPAN vol. 10, no. 10 (M-446)16 January 1986 & JP-A-60 171 938 ( YASUYOSHI ) 5 September 1985
- PATENT ABSTRACTS OF JAPAN vol. 13, no. 503 (E-844)13 November 1989 & JP-A-1 200 873 ( YOSHIO ) 14 August 1989

## Description

### BACKGROUND OF THE INVENTION

### Field of the Invention

This invention relates to an image forming apparatus including an electronic printer which converts coded characters or code information, which is graphic information, into bit map information (pixel information) and forms a recording image on transfer material on the basis thereof.

### Related Background Art

Since an electronic printer is capable of printing with high resolution and in high quality as an image forming apparatus as well known, various printers such as laser, LED and liquid crystal printers have been developed and wisely used in recent years. Images such as a complicated graph are output by utilizing the feature of printing in high quality.

In such an electronic printer, a controller (such as postscript interpreter) for processing complicated image data over one page of printed surface requires an image memory (hereinafter called "page memory") at least for one page. To print, for example, on paper A4 in size with a resolution of 300 dpi, a page memory of 1 megabyte is required.

A considerable amount of image information are thus processed by high quality electronic printers. For this reason, image data, which are processed by storage devices for computers and other information processing equipment systems, are mostly not first-hand luster image data, but coded or programmed data.

Accordingly, it represents the performance of a page printer how fast coded image information for one page is converted into luster image information for one page for printing.

One of conventional examples for form of control of this page printer will be shown below.

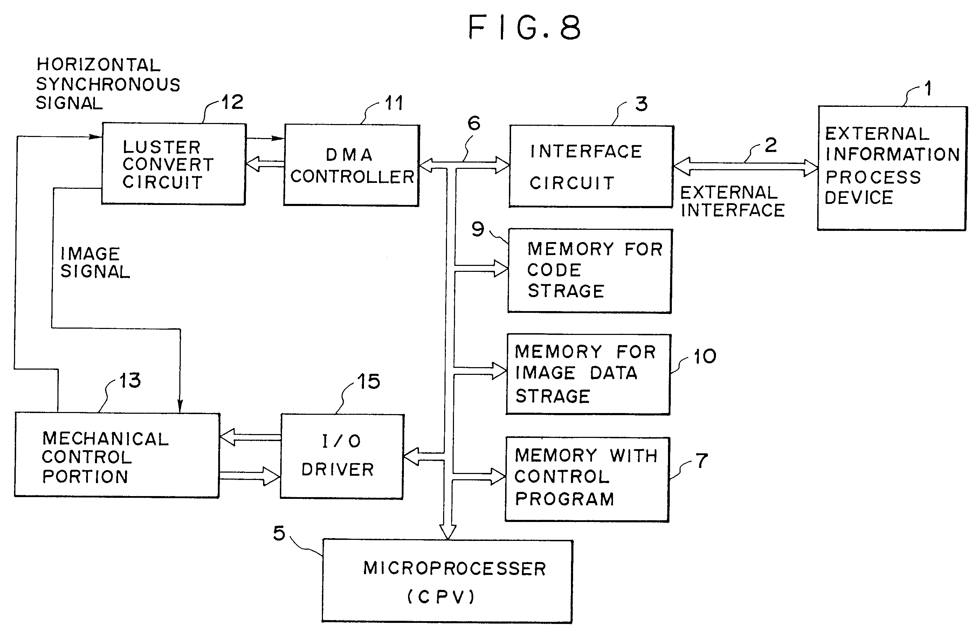

Fig. 8 shows a simple block diagram of the control circuit for a general laser printer. In Fig. 8, numeral 1 shows an information processing equipment (such as a personal computer and work station) outside the laser printer. Numeral 2 is an external interface (such as centronics and RS232C), which transmits coded image information (such as ASCII code. These will be hereinafter called "code information") to the laser printer. The code information is received by an interface circuit (receiving means) 3 within the laser printer.

A microprocessor (image converting means) 5 receives the code information received by the interface circuit 3, through an internal bus 6. This internal bus 6 consists of a data bus, an address bus and a control bus. The microprocessor 5 operates in accordance with the control program within a memory with program 7 (nonvolatile ROM).

The microprocessor 5 processes the code information obtained from the interface circuit 3 to some degree, and stores in a memory (RAM for storing code information) 9. The microprocessor 5 successively stores the code information received from outside in the memory 9, and at the same time, converts the code information into image information of dot image to store in a memory (RAM for storing image data (bit map memory)) 10 (hereinafter called "image development").

A DMA controller 11 reads out the data stored in the memory 10, and transmits to a luster conversion circuit 12. The DMA controller 11 can occupy the internal bus 6 independently of the microprocessor 5. When the microprocessor 5 detects that the image data, which has been stored in the memory 10, has reached data for one page, that is, when it detects that all code data for one page have been converted into image data, the microprocessor 5 activates the DMA controller 11.

The DMA controller 11 and the microprocessor 5 alternately occupy the internal bus. The DMA controller 11 successively reads out image data from the memory 10 in accordance with the request of the luster conversion circuit 12 to transmit the image data into the luster conversion circuit 12. The luster conversion circuit 12 converts the parallel image data received from the DMA controller 11 into serial image data. The serial image data is output into a laser driver (not shown) of a mechanical control portion 13 synchronizing with the horizontal synchronizing signal to modulate the laser beam.

The microprocessor 5 not only develop code data in image data, but also commands various printing processes to the laser printer mechanical control portion 13. An I/O driver 15 provides an interface between the microprocessor 5 and the mechanical control portion 13.

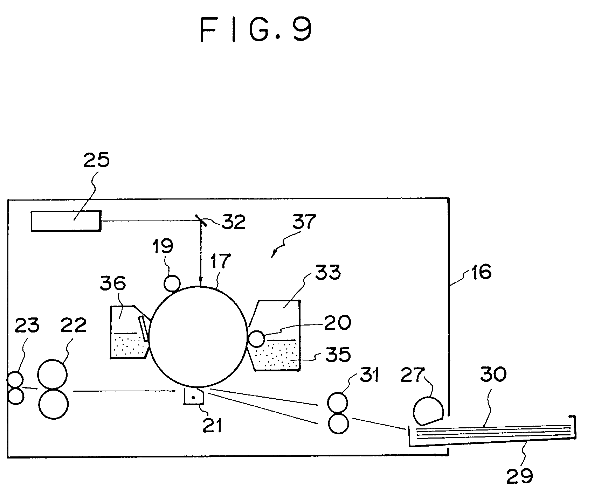

The mechanical control of a laser printer will be described referring to Fig. 9.

Fig. 9 is a longitudinal sectional front view of a typical laser printer as a page printer. In Fig. 9, numeral 16 shows the printer main body. The microprocessor 5 develops code data for one page, and stores the image data in the memory 10. Then it rotates a carry motor (not shown) through the I/O driver 15. At this time, a photosensitive drum 17, a primary charge roller 19, a development roller 20, a transfer charger 21, a pair of fixing rollers 22 and a pair of discharge rollers 23 start driving. The rotation of the carry motor is controlled by the mechanical control portion 13.

A laser scanner 25 has a laser scan mirror, a laser scan motor, a laser light emitting element, and a laser driving circuit (all not shown) therein. The I/O driver 15 drives the carry motor, and also the laser scan motor within the laser scanner 25. The I/O driver 15 also successively applies a high voltage to the primary charge roller 19, the development roller 20, and the transfer charger 21. The I/O driver 15 also engages a clutch (not shown) installed to a paper feed roller 27 to feed transfer material 30 loaded on a paper cassette 29.

The fed transfer material 30 stops at a pair of regist rollers 31 once, and the mechanical control portion 13 notifies the I/O driver 15 that the fed transfer material 30 has arrived at a paired regist rollers 31. When the transfer material 30 has stopped at the paired regist rollers 31, the microprocessor 5 activates the DMA controller 11.

Serial image data is transmitted from the luster conversion circuit 12. The transmitted serial image data is input in the laser scanner 25, and laser light modulated with the image data is irradiated on the photosensitive drum 17 through a reflective mirror 32. A latent image is formed on its photosensitive body surface, and is visualized into a toner image with toner 35 fed by a development unit 33.

The transfer material 30, which has stopped at the paired regist rollers 31, is carried thereby again, and the toner image is transferred on the transfer material 30 by the transfer charger 21. The transfer material 30, which has been attached with toner, is heat fixed by a pair of fixing rollers 22, and thereafter is discharged outside the main body 16 by a pair of discharge rollers 23. Toner 35 on the photosensitive drum 17, which has not been transferred on the transfer material 30 by the transfer charger 21, is collected in a cleaner 36.

Image forming means 37 is composed of the photosensitive drum 17, the primary charge roller 19, the transfer charger 21, the laser scanner 25, the development unit 33 and the cleaner 36.

The code information thus provided by the external information processing equipment is printed on the transfer material 30 as the image information.

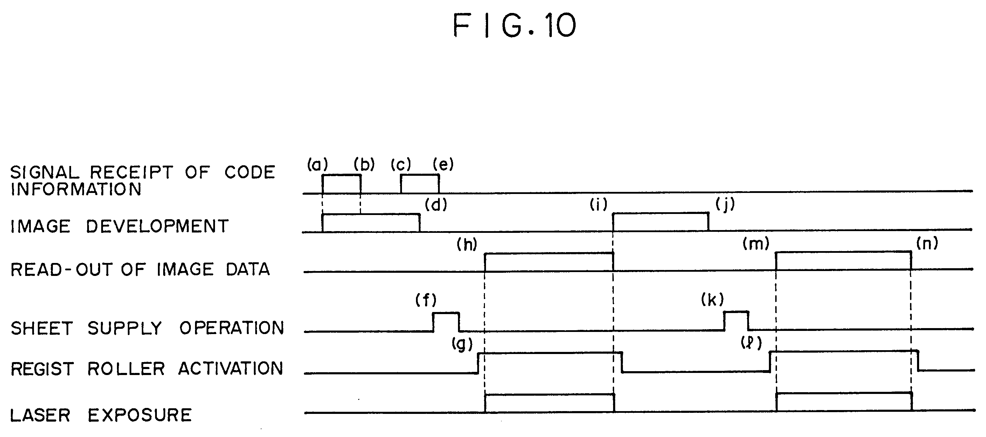

To print pages of data, printing is performed with such a timing as shown in Fig. 10.

First, the microprocessor 5 starts receiving code information with timing (a). At the same time, the microprocessor 5 starts developing the image, and stores the image data in the memory 10. After completing the reception of the code data on the first page with timing (b), the microprocessor 5 continuously starts receiving the code information on the second page with timing (c).

After the image on the first page has been developed with timing (d), the microprocessor rotates the carry motor to feed paper with timing (f). The paired regist rollers 31 are driven with timing (g). With timing (h), the DMA controller 11 starts reading out the image data, and serial image data is formed by the luster conversion circuit 12 to start laser exposure.

The laser exposure on the first page is completed with timing (i). Also, the reception of code information on the second page has been already completed with timing (e), and the image development on the second page is started with above timing (i). Thereafter, the printing operation for the second page is performed in the same sequence as on the first page.

In Fig. 10, periods (a) to (d) and (i) to (j), in which image development is being performed, are completely independent from a period (h) to (i) (which is also a laser exposure period) for reading out image data, and both have not an overlapped period. This is because the image memory has capacity for only one page.

In such a method, however, no access to the image memory 10 has been performed in a period of (f) to (h) (or a period of (k) to (m)). Therefore, in LBP with a very long distance between a paper feed roller 27 and the paired regist rollers 31, the throughput (number of printed sheets per unit time) lowers. If an image memory for two pages is provided in this case, the image development period can be overlapped with the read-out period for image data to improve the throughput. However, this has a defect that the memory cost will become double.

To solve this defect, Applicant of the present Application proposed an image forming apparatus capable of solving such a problem of lowered throughput at low cost in Japanese Patent Laid-Open No. 3-61058 disclosing an apparatus according to the preamble of claim 1.

In this image forming apparatus, when the microprocessor 5 receives code information for one page from an external information processing equipment 1 such as the host computer, feeding of the transfer material 30 is started, and stops feeding thereof at predetermined place to allow it stand by state.

Thereafter, at the time when the microprocessor 5 finished to develop the code information to image data of dot image, the image data of dot image is successively transmitted to the mechanical control portion 13 as serial image data, and exposes an electrophotographic photosensitive drum 17 by modulating the laser beam, and resumes the feeding of the transfer material 30 from the stand-by state so that the transfer material 30 synchronizes with the exposed image.

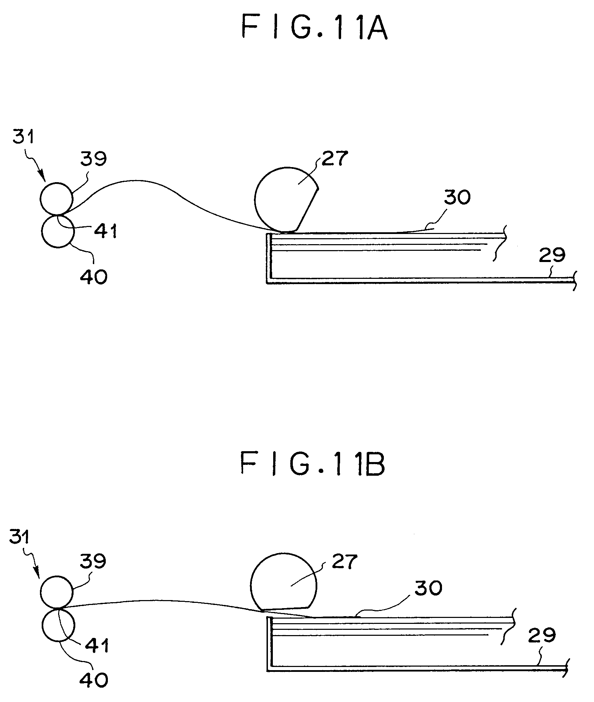

In the case of this image forming apparatus, the transfer material 30 fed by a paper feed roller 27 is carried by paired of regist rollers 31, and the transfer material 30 is allowed to stop at stand-by position by stopping the paired regist rollers 31 (Fig. 9). Figs. 11A and 11B show a state in which the transfer material 30 fed by the paper feed roller 27 stops at a position where the paired regist rollers 31 stop for stand-by.

In Fig. 11A, the tip end of the transfer material 30 is at stand-by position by being pressed against a nip 41 between an upper roller 39 and a lower roller 40 of the paired regist rollers 31. In Fig. 11B, the tip end of the transfer material 30 is at the stand-by position by being held by the nip 41 between the upper roller 39 and the lower roller 40 of the paired regist rollers 31.

When, however, the transfer material 30 is allowed to stand-by at a position where the paired regist rollers 31 stop, local deflection occurs in the transfer material 30, which causes improper transfer. That is, when the transfer material 30 stands by in a state shown in Fig. 11A, a loop is formed in the transfer material 30 to deform the transfer sheet, thus causing deflection thereof. Also when the transfer material 30 stands by in a state shown in Fig. 11B, deflection occurs in the transfer material 30 by being applied a deformation force from the upper roller 39 and the lower roller 40 of the paired regist rollers 31.

Since the paired regist rollers 31 hold the transfer material 30 over the full width for carrying, this deflection occurs over the full width of the transfer material 30. Since the adhesion of the transfer material 30 to the photosensitive drum 17 is inferior in the deflected portion when the transfer material 30 comes into contact with the photosensitive drum 17 to be transferred the toner image thereon, improper transfer (for example, since part of the image is void as white blank toner is not transferred partially, or due to insufficient contact of the transfer sheet to the photosensitive body, the image become unclear) is occurred.

For the transfer material 30, mother print paper, OHP film, artificial paper, envelops, etc. as well as normal paper are used. Since any of these is of a thin sheet, deflection easily occurs in a portion subjected to a deformation force when it has been left alone for a long time (when a long time is needed to develop the image) under such condition where a deformation force is applied as shown in Figs. 11A and 11B in a high temperature and humidity environment.

### SUMMARY OF THE INVENTION

The present invention has been performed in view of the above-mentioned circumstances, and has an object to provide an image forming apparatus which improves the throughput, and not causing any deflection in the transfer material during stand-by and not impairing the adhesion with the photosensitive drum, thereby preventing improper transfer.

### BRIEF DESCRIPTION OF THE DRAWINGS

Fig. 1 is a longitudinal sectional front view showing the overall construction of an image forming apparatus (laser beam printer) according to a first embodiment of the present invention;
Fig. 2A is a perspective view of transfer material carrying means used for the image forming apparatus, and Fig. 2B is a plan view of the same;
Fig. 3 is a timing chart for the image forming apparatus;
Fig. 4 is a longitudinal sectional front view showing the overall construction of an image forming apparatus (laser beam printer) according to a second embodiment of the present invention;
Fig. 5 is a longitudinal sectional front view of a transfer roller used for the image forming apparatus;
Fig. 6 is a block diagram showing a control circuit (another example of construction of a control circuit for an image forming apparatus according to the first and second embodiments) according to a third embodiment;
Fig. 7 is a timing chart for an image forming apparatus equipped with the control circuit;
Fig. 8 is a block diagram of a control circuit for a conventional image forming apparatus;
Fig. 9 is a longitudinal sectional front view showing the overall construction of a conventional image forming apparatus (laser beam printer);
Fig. 10 is a timing chart for the image forming apparatus; and
Figs. 11A and 11B are longitudinal sectional front views showing transfer material which is in a stand-by state after being fed in a conventional image forming apparatus.

### DETAILED DESCRIPTION OF THE PREFERRED EMBODIMENTS

The present invention will hereinafter be described with respect to embodiments thereof shown in the drawings.

### 〈First Embodiment〉

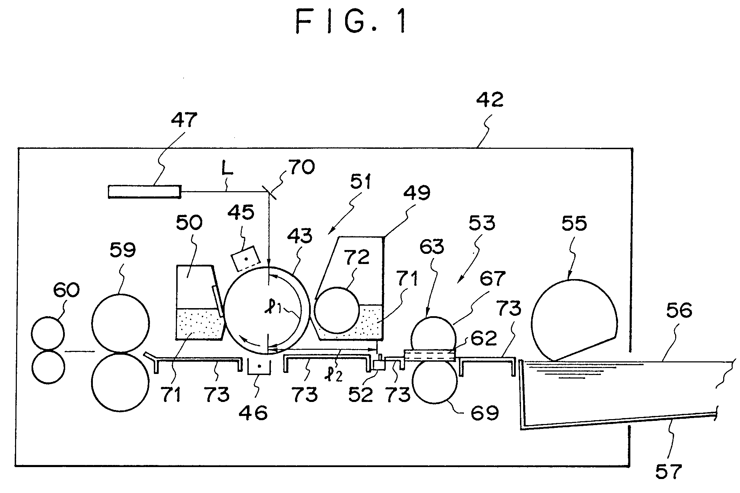

Fig. 1 shows an overall construction of an image forming apparatus (laser beam printer) according to the first embodiment of the present invention.

In this image forming apparatus, image forming means 51 which is composed of a photosensitive drum 43, a primary charger (corona charger) 45, a transfer charger 46, a laser scanner 47, a development unit 49 and a cleaner 50 is located almost at the center of a main body of the apparatus 42. On its paper feed side, a transfer material tip end detection sensor 52, transfer material carrying means 53, a paper feed roller 55 and a paper feed cassette 57 with transfer material 56 loaded thereon are located, and on the exhaust paper side, a pair of fixing rollers 59 and a pair of exhaust rollers 60 are located.

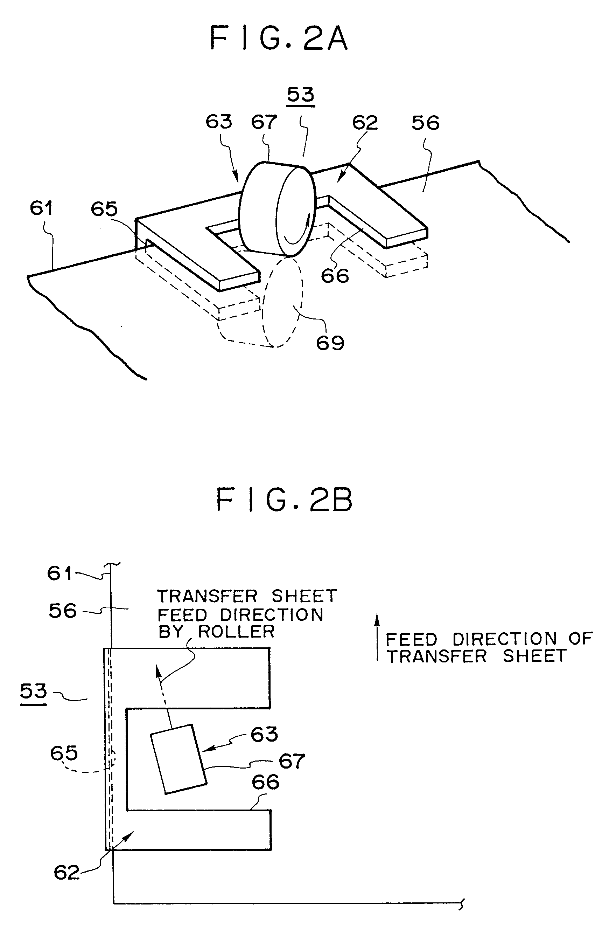

Transfer material carrying means 53 comprised of a lateral regist plate 62 for abutting one side end 61 of transfer material (sheet) 56 fed by a paper feed roller 55 to the lateral reference, and a pair of oblique rollers 63 for carrying the transfer sheet 56 with pressing it against the lateral regist plate 62 as shown in Figs. 2A and 2B. The lateral regist plate 62 is provided on the transfer sheet carrying path to guide the fed transfer sheet 56 with holding it (Fig. 2A), and effect the lateral regist or reference at sidewall 65 thereof a side end 61 of the transfer sheet 56 (Fig. 2B).

The paired oblique rollers 63 are located in a notch 66 formed at the center portion of the lateral regist plate 62. The paired oblique rollers 63 is comprised of an upper roller 67 and a lower roller 69 which are capable of carrying the transfer sheet 56 by the same speed as the process speed. In this case, the upper roller 67 is driven by a carry motor (not shown) and the lower roller 69 follows it. The upper roller 67 is preferably made of hard material such as stainless steel, polyacetal resin (POM) and ABS resin. On the other hand, the lower roller 69 is preferably made of soft material such as urethane rubber, silicone rubber, epoxy resin (EP) and urethane system elastomer. In this embodiment, the upper roller 67 and the lower roller 69 are made of POM and silicone rubber respectively, and have 15 mm in diameter and 10 mm in width each. The contact pressure between the rollers is about 300 g.

When the transfer sheet 56 is fed by the paired oblique rollers 63, a transfer sheet tip end detection sensor 52 detects it, and stops the rotation of the paired oblique rollers 63. (disengages the clutch of the upper roller 67). This allows the transfer sheet 56 to stop for stand-by at the position of the transfer sheet tip end detection sensor 52. The tip end of the transfer sheet 56 is not subjected to a deformation force due to the loop since it is released. Also since a portion of the transfer sheet held between by the paired oblique rollers 63 is only a portion of the full width, its deformation force is small.

Since the paired oblique rollers 63 carry the transfer sheet 56 while pressing it against the lateral regist plate 62, the contact pressure between the upper roller 67 and the lower roller 69 requires a small force. Therefore, local deflection hardly occurs in the transfer sheet 56 in the stand-by state. When the paired oblique rollers 63 are driven again, the transfer sheet 56 is carried to the photosensitive drum 43. The upper roller 67 rotates to carry the transfer sheet 56 while slipping on it.

In this image forming apparatus, an image is formed on the transfer sheet 56 by image forming means 51 as follows:
First, use the primary charger 45 to uniformly charge the surface of the photosensitive drum 43, which is rotating in the arrow direction. Then irradiate laser light L modulated with the image data by a laser scanner 47 onto the photosensitive drum 43 through a reflective mirror 70 to form a electrostatic latent image on the photosensitive drum 43. Then the electrostatic latent image on the photosensitive drum 43 is visualized into a toner image by feeding toner 71 within a developer 49 by a development roller 72.

On the other hand, the transfer sheet 56 loaded on the paper feed cassette 57 is fed by the paper feed roller 55, and is carried on a carry guide 73, and is stopped for stand-by when fed to the transfer sheet tip detection sensor 52 by the pair of oblique rollers 63. Thereafter, the transfer sheet is fed to the transfer charger 46 by the paired oblique rollers 63 so that it synchronizes with an image written on the photosensitive drum 43, and the toner image is transferred thereon.

The image thus transferred on the transfer sheet 56 is fixed by a paired fixing rollers 59, and is exhausted outside the apparatus main body 42 by a paired exhaust rollers 60. Toner remaining on the photosensitive drum 43 after transfer is cleaned by a cleaner 50 to proceed the process to the next stage.

A control circuit for forming the abovementioned image has a construction shown in the above Fig. 8, and effects control as mentioned above.

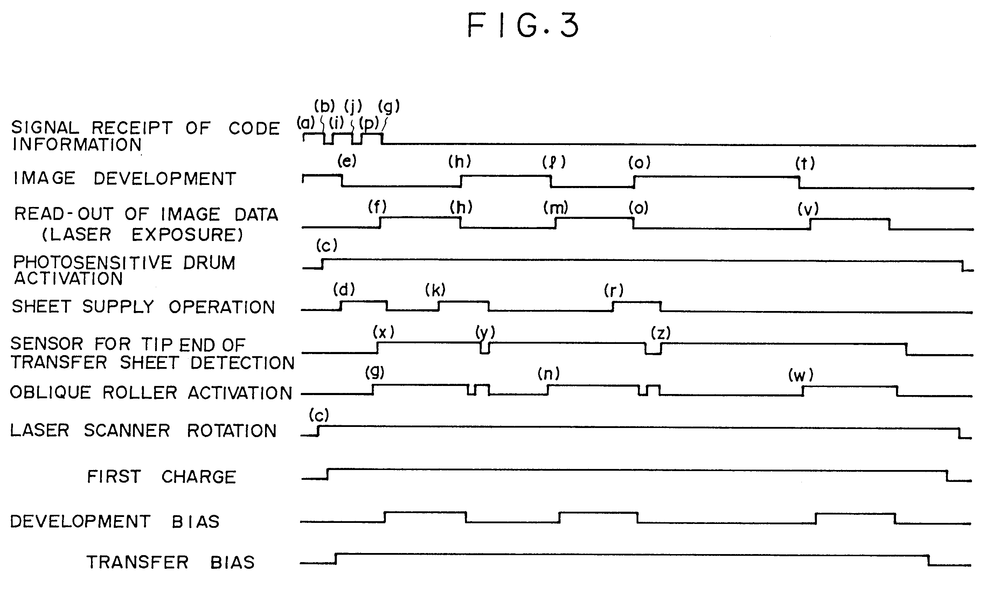

Fig. 3 shows a timing chart for control of this image forming apparatus.

It is assumed that code information for three pages has been received with each timing (a-b), (i-j) or (p-q). First, image development for code information (a-b) on the first page is started by the control of a microprocessor 5 in the control portion. After completion of receipt of the code information on the first page, the drive of the photosensitive drum 43 and the rotation of a laser scanner 47 are started with timing (c) to start the operation of the image forming apparatus main body 42.

Then the primary charge and transfer bias are successively applied to perform a print preparatory operation called a series of "pre-rotation" such as uniform charging of the surface of the photosensitive drum 43 and adjusting the output of the laser scanner 47.

The apparatus main body 42 performs a paper feed pickup operation with timing (d) prior to laser exposure (timing (f)) after starting the drive of the photosensitive drum 43 (timing (c)), and starts driving the paired oblique rollers 63 with timing (g). As the result, the transfer sheet 56 is carried, and the transfer sheet tip detection sensor 52 is set to ON to stop the transfer sheet at this position for stand-by.

As a result, it is possible to carry the transfer sheet 56 synchronizing with the laser exposure. In this case, if the pre-rotation is not yet finished even if the image development on the first page has been completed with timing (e), the image data is not read out, and the transfer sheet 56 stops at the position of the transfer sheet detection sensor 52 for stand-by. After the pre-rotation has been finished, read-out of the image data is started with timing (f).

With the read-out (laser exposure) of this image data, the image is written on the photosensitive drum 43 by the laser scanner 47. The transfer sheet 56, which has already reached the position of the transfer sheet tip end detection sensor 52 by the paired oblique rollers 63, synchronises with the photosensitive drum 43, and the paired oblique rollers 63 are driven for rotation with the following predetermined time delay with timing (g). Here, the time delay (a difference in length under constant speed) is a difference between a time in which the photosensitive drum 43 rotates for a length ℓ₁ between the laser exposure position and the transfer charger 46, and a time in which the transfer sheet 56 moves over a length ℓ₂ between the transfer sheet tip end detection sensor 52 and the transfer charger 46. The relationship between length ℓ₁ and ℓ₂ here should be ℓ₁ > ℓ₂, and if it was set that ℓ₁ < ℓ₂, tip end of image would be broken.

When the electrostatic latent image written with laser exposure reaches the development position, by the rotation of the photosensitive drum 43 a development bias is applied for development, and the electrostatic latent image is visualized to a toner image.

After the read-out of the image data on the first page has been finished with timing (h), image development (i-j) on the second page is started. Since the microprocessor (CPU) 5 in Fig. 8 has received code information on the second page, paper feed pick-up operation on the second page is performed with timing (k) while the image data on the first page is being read out. If image development (h-ℓ) on the second page is finished earlier than a paper interval processing time (h-m) of the image forming apparatus, read-out (m) of image data on the second page will stop for stand-by until the paper interval processing time. The paper interval processing means automatic adjustment of the amount of laser light to be performed between laser exposure for one page and laser exposure for the next page, and the like.

Since the microprocessor 5 has received code information on the third page, paper feed pick-up operation on the third page is performed with timing (r) while the image data on the second page is being read out. After the read-out of image data on the second page has been finished, image development (O-t) on the third page is started. If image development (O-t) on the third page requires more time than an paper interval processing time for the image forming apparatus, read-out of image data will wait until the image development is over while the top end of the transfer sheet 56 is at the position of the transfer sheet tip end detection sensor 52 (r-w). After the image development is over with timing (t), the image data is read-out with timing (v), and the transfer sheet 56 is fed with timing (w).

Since the microprocessor 5 has not received code information on the fourth page and after, a paper feed operation for the fourth page is not performed. When the image is transferred on the transfer sheet 56 on the third page, the step proceeds to the post-rotation operation, and the transfer bias is set to OFF, the surface of the photosensitive drum 43 is leveled to an uniform electric potential only by the primary charge, and thereafter the transfer sheet 56 is exhausted outside the apparatus proper 42. The drive of the photosensitive drum 43 and the rotation of the laser scanner 47 are stopped.

### 〈Second Embodiment〉

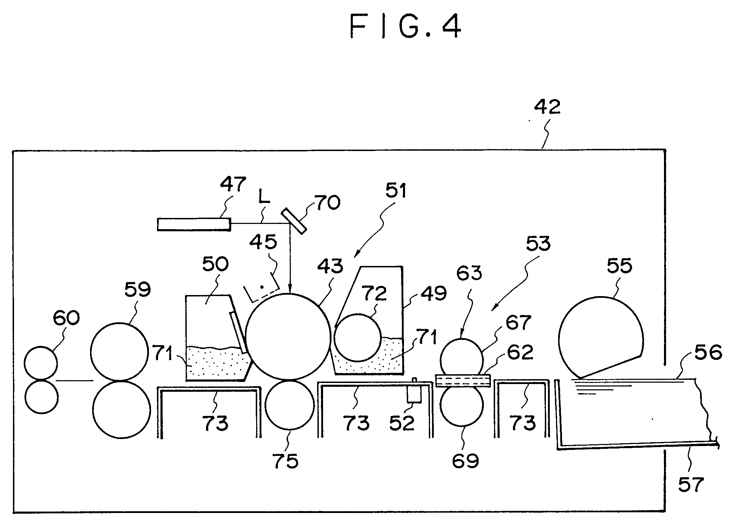

Fig. 4 shows an overall construction of an image forming apparatus (laser beam printer) according to the second embodiment of the present invention.

In this embodiment, a contact type transfer roller 75 is used in place of the transfer charger 46 for the image forming means 51 in the above first embodiment.

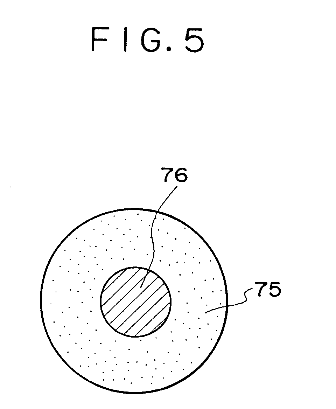

The transfer roller 75 is made of an elastic body having a mandrel 76 made of iron or stainless steel as shown in Fig. 5. For this elastic body, material such as urethane rubber, neoprene rubber and silicone rubber is used, and is of the solid structure of porous structure. The transfer roller 75 can have a specific volume resistivity (such as 10⁵ to 10¹² Ω-cm) by containing carbon, zinc oxide, etc.

Such a transfer roller 75 forms a nip by being pressed against the photosensitive drum 43 for contact. A bias of polarity that attracts the toner image which has been developed on the photosensitive drum 43 onto the transfer sheet 56 is applied to between the transfer roller 75 and the photosensitive drum 43. The toner image on the photosensitive drum 43 is thereby transferred on the transfer sheet 56 by the pressing force of the transfer roller 75 and the electric field.

When the paired oblique rollers 63 are used as means for carrying the transfer sheet 56 like the above embodiment, vibration of the transfer sheet 56 at the transfer nip is a serious problem because the carrying nip 41 for carrying the transfer sheet 56 is extremely narrow than that of the conventional paired regist rollers 31. Especially, when printing on thick paper (128 g/m² paper) or thin paper (50 g/m² paper or less) and speciality paper such as postal cards and envelops, transfer vibration easily occurs.

However, if the contact type transfer roller 75 is used as transfer means like above embodiment, the transfer vibration can be prevented to obtain good transfer property because the transfer sheet 56 adheres to the photosensitive drum 43 and transfer is performed under the pressure and electric field.

The image forming apparatus according to this embodiment is also provided with a control circuit shown in Fig. 8.

### 〈Third Embodiment〉

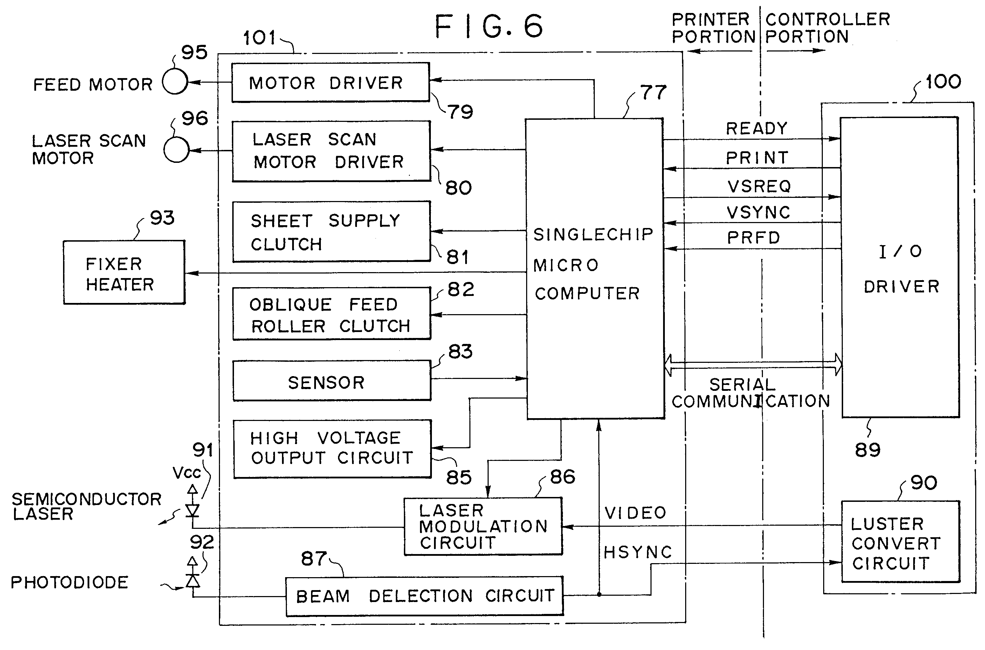

In this embodiment, another example of construction of a control circuit for image forming apparatus (laser beam printers) different from the above-mentioned first and second embodiments. Fig. 6 shows control circuit thereof.

This control circuit is divided into a controller portion 100 for receiving code information for image from the host computer and mainly handling image information such as image development of code information, and a printer portion 101 for controlling the operation of the image forming apparatus main body. The control circuit is provided with elements corresponding to the I/O driver 15 for control circuit, the mechanical control portion 13 and the luster conversion circuit 12 as shown in the above Fig. 8.

In the control circuit, the image forming apparatus main body is mechanically controlled by a single tip microcomputer 77. As loads for the single chip microcomputer, there are a motor driver 79, a laser scan motor driver 80, a paper feed clutch 81, an oblique feed roller clutch 82, a sensor 83, a high voltage output circuit 85, a laser modulation circuit 86, a beam detection circuit 87 and a fixer heater 93.

The single chip microcomputer 77 controls each of the above-mentioned loads in accordance with a command from the I/O driver 89 of the controller portion 100. The READY, PRINT, VSREQ, VSYNC, and PRFD signals are transmitted and received between the single chip microcomputer and the I/O driver 89. In addition between the two, a serial communication line to transmit to the I/O driver 89 a loading state of the printer portion 101, and to transmit a special command of the I/O driver 89 to the single chip microcomputer 77 are connected.

An image signal (VIDEO signal) output from a luster conversion circuit 90 in the controller portion 100 is input into a laser modulation circuit 86 to modulate beam output from a semiconductor laser 91 in accordance with the VIDEO signal. The laser beam is scanned by the laser scan mirror (not shown), and the scanned laser beam enters into a photodiode 92. The laser beam is converted into a pulse signal by a beam detection circuit 87. The pulse signal output from the beam detection circuit 87 is input into the luster conversion circuit 90 as a horizontal synchronizing signal (HSYNC signal).

The output of the single chip microcomputer drives the motor driver 79 to rotate the carry motor 95, and drives the laser scan motor driver 80 to rotate the laser scan motor 96.

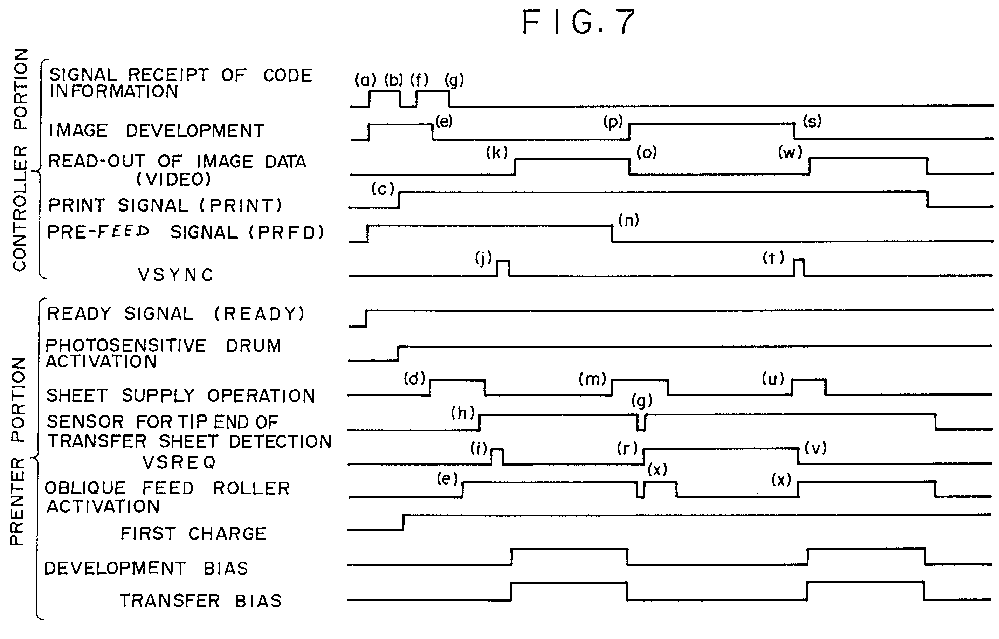

Fig. 7 shows a timing chart for an image forming apparatus equipped with the above-mentioned control circuit.

When the power has been turned on for a printer portion 101 and the printer portion is ready for receiving a print signal (PRINT) at any time, the ready signal (READY) is TRUE. After the controller portion has received code data (a-b) for one page in this state, it transmits a print signal (PRINT) and a prefeed signal (PRFD) to the printer portion 101. Upon receipt of these signals, at the printer portion 101, the drive of the photosensitive drum is started and successively performs the primary charge, transfer bias, paper feed pick-up operations, etc. to prepare receiving an image signal.

The paper feed pick-up operation is performed (d), and when the tip end of the transfer sheet 56 reaches the transfer sheet tip end detection sensor 52, the output of the photosensor also becomes Hi (h). The VSREQ signal is made TRUE (i) to notify the controller that the printer portion 101 has been ready for receiving an image signal. After the receipt of this VSREQ signal, the controller portion 100 gives a VSYNC signal (j) notifying of the start of the image data transmission. Then the image data is read out, and is transmitted to the printer portion 101 as a video signal (VIDEO) (k-o).

On receipt of the VSYNC signal from the controller portion 100 in the printer portion 101, the transfer sheet 56 which has stood by is fed by the restart of the paired oblique rollers 63, and is fed toward the photosensitive drum 43 with timing so that the tip end of the image on the photosensitive drum 43 with the tip end of the transfer sheet 56 are registered, and subject to transfer by a transfer charger 46 or the transfer roller 75.

Since the controller portion 100 has received code data (f-g) on the second page, the prefeed signal (PRFD) has been TRUE. Therefore, although the controller portion 100 is still reading out an image data on the first page, paper for the second page is fed (m) in the printer portion 101. After the paper for the second page has been fed, the prefeed signal (PRFD) becomes FALSE (n) because the controller portion 100 has not received the code information on the third page. When the image data on the first page has been read out (o), the image development (p-s) on the second page is started. When the fed transfer sheet 56 has reached the transfer sheet tip end detection sensor 52, sensor output thereof becomes Hi (q), and the VSREQ signal becomes TRUE (r).

When it takes same time to develop an image, the printer portion 101 waits for a VSYNC signal from the controller portion 100 in this state. After the image development is over (s), a VSYNC signal is given, and paper feed (u) and drive of the paired oblique rollers 63 (x) are effected. When the image data on the second page has been read out, the print signal becomes FALSE, and the printer portion 101 proceeds to the post-rotation wherein the drive of the transfer bias, the primary charge, and the photosensitive drum 43 are successively stopped. Thus, the operation is terminated.

When it takes more than a predetermined time to develop an image, the printer portion 101 proceeds to the post-rotation for stop and wait until the image development is over.

Since the above control circuit is divided into the controller portion 100 and the printer portion 101, it can be widely applied to host computers having page descriptive languages, and the controller portion 100 can be operated irrespective of the paper feed timing of the printer portion 101. Accordingly, this has a merit that the control is simplified.

On the other hand, since signals are exchanged, the stand-by time for the fed transfer sheet 56 tends to be long. However, a deformation in the transfer sheet 56 during stand-by occurs only at a place held by the pair of narrow, oblique rollers 63, and therefore the transfer sheet is not subjected to such a deformation to deteriorate the transfer property different from a conventional paired regist rollers 31.

As the transfer sheet carrying means constituting the present invention, it is possible to hold the transfer sheet 56 at the non-image forming area of right and left side ends thereof for feeding and the registration is effect with a regist shutter and the like, in addition to the transfer sheet carrying means 53 using the paired oblique rollers 63 shown in the above embodiments.

Also as the contact type transfer means according to the present invention, there can be adopted a transfer belt, etc. besides the transfer roller 75 shown in the above embodiments.

The oblique roller 63 and the lateral regist plate 62 shown in Figs. 2A and 2B can be applied to an image forming apparatus of such a construction that sheet is allowed to stand-by near the photosensitive drum, and the sheet is carried so that the sheet tip end reaches the transfer position at the time when the toner image tip end on the photosensitive drum reaches the transfer position. As an example of such an image forming apparatus, a copying machine with a prefeed mechanism can be used.

## Claims

1. An image forming apparatus, comprising:
a) image forming means **(51)** for forming an image on a sheet **(56)** on the basis of a pixel information;
b) carrying means **(53)** for carrying said sheet **(56)** to said image forming means **(51)**, and
c) control means **(13)** for controlling said carrying means **(53)**;
d) receiving means **(3)** for receiving coded character or graphic information;
e) converting means **(5)** for converting said coded information received by said receiving means **(3)** into said pixel information;
f) wherein said carrying means **(53)** is arranged such that it holds only a portion of said sheet **(56)** in a direction perpendicular to the carrying direction;
**characterized by**
g) detecting means **(52)** for detecting said sheet **(56)** at the upstream side of said image forming means **(51)**;
h) wherein said control means **(13)** controls said carrying means **(53)** so that it starts carrying said sheet **(56)** after coded information for one page has been received by said receiving means **(3)**, stops at a predetermined stand-by position on the basis of a detection signal from said detecting means **(52)** when said conversion into said pixel information by said converting means **(5)** has not yet been finished, and carries said sheet to said image forming means **(51)** after said conversion has been completed.

2. An image forming apparatus according to claim 1, **characterized in that** said carrying means **(53)** has a regulating member **(62)** for regulating the sheet position in the width direction by abutting one side end of the sheet, and oblique feed means **(63)** for carrying said sheet while pressing it against said regulating member **(62)**.

3. An image forming apparatus according to claim 2, **characterized in that** said oblique feed means **(63)** has a rotary body which comes into contact with said sheet **(56)** to give said sheet **(56)** a carrying force by rotating around a rotating shaft which is inclined relative to said direction perpendicular to said carrying direction.

4. An image forming apparatus according to any one of claims 1, 2 or 3, **characterized in that** said image forming means **(51)** has an image bearing body **(43)** which bears an image and transfers it onto said sheet **(56)**.

5. An image forming apparatus according to claim 4, **characterized in that** said image forming means **(51)** has means for causing said image bearing body **(43)** to bear an image on the basis of said pixel information.

6. An image forming apparatus according to claim 5, **characterized in that** said image bearing body includes a photosensitive drum **(43)**, and means for causing said image bearing body to hold said image including light emission means **(47)** to form a latent image by irradiating light on said photosensitive drum **(43)**.

7. An image forming apparatus according to claim 6, further **characterized by** a transfer roller **(75)** which holds said sheet **(56)** cooperating with said photosensitive drum **(43)** to transfer an image held by said photosensitive drum **(43)** onto said sheet **(56)**.

8. An image forming apparatus according to claim 1, further **characterized by** mounting means **(57)** for mounting said sheet **(56)**, and feeding means **(55)** for feeding the sheet placed on said mounting means **(57)** to said carrying means **(53)**.

9. An image forming apparatus according to claim 8, further **characterized in that** said control means **(13)** controls said feeding means **(55)** so that feeding of said sheet **(56)** is started after receiving coded information for one page by said receiving means **(3)**.

10. An image forming apparatus according to claim 8 **characterized in that** the converting by said converting means **(5)** and the feeding by said feeding means **(55)** are effected simultaneously.

11. An image forming apparatus according to claim 4, **characterized in that** said image forming means **(51)** has a transfer roller **(75)** holding said sheet **(56)** and cooperating with said image bearing body **(43)** for transferring an image held by said image bearing body **(43)** onto said sheet **(56)**.

## Patentansprüche

1. Bilderzeugungsgerät mit:
a) einer Bilderzeugungsvorrichtung (51) zum Erzeugen eines Bildes auf einem Blatt (56) auf der Grundlage von Bildelement-Informationen,
b) einer Transportvorrichtung (53) zum Transportieren des Blattes (56) zu der Bilderzeugungsvorrichtung (51),
c) einer Steuervorrichtung (13) zum Steuern der Transportvorrichtung (53),
d) einer Empfangsvorrichtung (3) zum Empfangen von codierten Zeichen oder graphischen Informationen und
e) einer Umwandlungsvorrichtung (5) zum Umwandeln der durch die Empfangsvorrichtung (3) empfangenen codierten Informationen zu Bildelement-Informationen,
f) wobei die Transportvorrichtung (53) derart aufgebaut ist, daß sie nur einen Abschnitt des Blattes (56) in einer Richtung hält, die senkrecht zu der Transportrichtung ist,
**gekennzeichnet durch**
g) eine Erfassungsvorrichtung (52) zum Erfassen des Blattes (56) an der stromauf gelegenen Seite der Bilderzeugungsvorrichtung (51),
h) wobei die Steuervorrichtung (13) die Transportvorrichtung (53) derart steuert, daß sie einen Transport des Blattes (56) startet, nachdem codierte Informationen für eine Seite durch die Empfangsvorrichtung (3) empfangen worden sind, bei einer vorbestimmten Bereitschaftsposition auf der Grundlage eines Erfassungssignals aus der Erfassungsvorrichtung (52) stoppt, wenn die Umwandlung zu den Bildelement-Informationen durch die Umwandlungsvorrichtung (5) noch nicht beendet worden ist, und das Blatt zu der Bilderzeugungsvorrichtung (51) transportiert, nachdem die Umwandlung abgeschlossen worden ist.

2. Bilderzeugungsgerät nach Anspruch 1, **dadurch gekennzeichnet, daß** die Transportvorrichtung (53) ein Regulierungsteil (62) zum Einstellen der Blattposition in der Breitenrichtung durch Anstoßen eines Randes des Blattes und eine schräge Zufuhrvorrichtung (63) zum Transportieren des Blattes aufweist, während es gegen das Regulierungsteil (62) gedrückt wird.

3. Bilderzeugungsgerät nach Anspruch 2, **dadurch gekennzeichnet, daß** die schräge Zufuhrvorrichtung (63) einen Drehkörper aufweist, der mit dem Blatt (56) in Berührung kommt, damit dem Blatt (56) eine Transportkraft durch Drehen um eine Drehwelle gegeben wird, die bezüglich der Richtung senkrecht zu der Transportrichtung geneigt ist.

4. Bilderzeugungsgerät nach einem der Ansprüche 1, 2 oder 3, **dadurch gekennzeichnet, daß** die Bilderzeugungsvorrichtung (51) einen Bildträgerkörper (43) aufweist, der ein Bild trägt und es auf das Blatt (56) überträgt.

5. Bilderzeugungsgerät nach Anspruch 4, **dadurch gekennzeichnet, daß** die Bilderzeugungsvorrichtung (51) eine Vorrichtung zum Verursachen aufweist, daS der Bildträgerkörper (43) ein Bild auf der Grundlage der Bildelement-Informationen trägt.

6. Bilderzeugungsgerät nach Anspruch 5, **dadurch gekennzeichnet, daß** der Bildträgerkörper eine lichtempfindliche Trommel (43) und eine Vorrichtung zum Verursachen aufweist, daß der Bildträgerkörper das Bild hält, einschließlich einer Lichtaussendevorrichtung (47) damit ein Latentbild durch Bestrahlen von Licht auf die lichtempfindliche Trommel (43) erzeugt wird.

7. Bilderzeugungsgerät nach Anspruch 6, **gekennzeichnet durch** eine Übertragungswalze (75), die das Blatt (56) hält, das mit der lichtempfindlichen Trommel (43) zum Übertragen eines durch die lichtempfindliche Trommel (43) gehaltenen Bildes auf das Blatt (56) zusammenwirkt.

8. Bilderzeugungsgerät nach Anspruch 1, **gekennzeichnet durch** eine Befestigungsvorrichtung (57) zum Befestigen des Blattes (56) und eine Zufuhrvorrichtung (55) zum Zuführen des auf die Befestigungsvorrichtung (57) gelegten Blattes zu der Transportvorrichtung (53).

9. Bilderzeugungsgerät nach Anspruch 8, **dadurch gekennzeichnet, daß** die Steuervorrichtung (13) die Zufuhrvorrichtung (55) derart steuert, daß eine Zufuhr des Blattes (56) gestartet wird, nachdem codierte Informationen für eine Seite durch die Empfangsvorrichtung (3) empfangen werden.

10. Bilderzeugungsgerät nach Anspruch 8, **dadurch gekennzeichnet, daß** die Umwandlung durch die Umwandlungsvorrichtung (5) und die Zufuhr durch die Zufuhrvorrichtung (55) gleichzeitig ausgeführt werden.

11. Bilderzeugungsgerät nach Anspruch 4, **dadurch gekennzeichnet, daß** die Bilderzeugungsvorrichtung (51) eine Übertragungswalze (75) aufweist, die das Blatt (56) hält und mit dem Bildträgerkörper (43) zum Übertragen eines durch den Bildträgerkörper (43) gehaltenen Bildes auf das Blatt (56) zusammenwirkt.

## Revendications

1. Appareil de formation d'image comprenant:
a) un moyen (51) de formation d'image pour former une image sur une feuille (56), sur la base d'une information de pixel;
b) un moyen de transport (53) pour transporter ladite feuille (56) vers ledit moyen (51) de formation d'image,
c) un moyen de commande (13) pour commander ledit moyen de transport (53);
d) un moyen de réception (3) pour recevoir un caractère codé ou une information graphique;
e) un moyen de conversion (5) pour convertir ladite information codée, reçue par ledit moyen de réception, (3) dans ladite information de pixel;
f) ledit moyen de transport (53) étant disposé de telle sorte qu'il maintient uniquement une partie de ladite feuille (56) dans une direction perpendiculaire à la direction de transport;
caractérisé par
g) un moyen de détection (52) pour détecter ladite feuille (56) du côté amont dudit moyen (51) de formation d'image;
h) ledit moyen de commande (13) commandant ledit moyen de transport (53) de telle sorte qu'il commence à transporter ladite feuille (56) après que l'information codée pour une page a été reçue par ledit moyen de réception (3), s'arrête dans une position d'attente prédéterminée sur la base d'un signal de détection en provenance dudit moyen de détection (52) lorsque ladite conversion dans ladite information de pixel par ledit moyen de conversion (5) n'est pas encore terminée, et transporte ladite feuille vers ledit moyen de formation d'image (51) après que ladite conversion est terminée.

2. Appareil de formation d'image selon la revendication 1, **caractérisé en ce que** ledit moyen de transport (53) comporte un élément de régulation (62) pour réguler la position de la feuille dans le sens de la largeur en venant buter contre une extrémité latérale de la feuille, et un moyen (63) d'alimentation oblique pour transporter ladite feuille tout en l'appuyant contre ledit élément de régulation (62).

3. Appareil de formation d'image selon la revendication 2, **caractérisé en ce que** ledit moyen (63) d'alimentation oblique comporte un corps rotatif qui vient en contact avec ladite feuille (56) pour conférer à ladite feuille (56) une force de transport, par rotation autour d'un arbre rotatif qui est incliné par rapport à ladite direction perpendiculaire à ladite direction de transport.

4. Appareil de formation d'image selon l'une quelconque des revendication 1, 2 ou 3, **caractérisé en ce que** ledit moyen (51) de formation d'image comporte un corps (43) de support d'image qui porte une image et la transfère sur ladite feuille (56).

5. Appareil de formation d'image selon la revendication 4, **caractérisé en ce que** ledit moyen (51) de formation d'image comporte un moyen pour conduire ledit corps (43) de support d'image à porter une image sur la base de ladite information de pixel.

6. Appareil de formation d'image selon la revendication 5, **caractérisé en ce que** ledit corps de support d'image comporte un cylindre photosensible (43), et un moyen pour conduire ledit corps de support d'image à maintenir ladite image comportant un moyen d'émission de lumière (47) pour former une image latente en irradiant de la lumière sur ledit cylindre photosensible (43).

7. Appareil de formation d'image selon la revendication 6, **caractérisé en outre par** un rouleau de transfert (75) qui maintient ladite feuille (56) en coopération avec ledit cylindre photosensible (43) pour transférer une image maintenue par ledit cylindre photosensible (43) sur ladite feuille (56).

8. Appareil de formation d'image selon la revendication 1, **caractérisé en outre** par un moyen de montage (57) pour le montage de ladite feuille (56), et un moyen d'alimentation (55), pour l'alimentation de la feuille placée sur ledit moyen de montage (57) vers ledit moyen de transport (53).

9. Appareil de formation d'image selon la revendication 8, **caractérisé en ce que** ledit moyen de commande (13) commande ledit moyen (55) d'alimentation de feuille de telle sorte que l'alimentation de ladite feuille (56) commence après la réception de l'information codée pour une page par ledit moyen de réception (3).

10. Appareil de formation d'image selon la revendication 8, **caractérisé en ce que** la conversion par ledit moyen de conversion (5) et l'alimentation par ledit moyen d'alimentation (55) sont effectuées simultanément.

11. Appareil de formation d'image selon la revendication 4, **caractérisé en ce que** ledit moyen (51) de formation d'image comporte un rouleau de transfert (75) maintenant ladite feuille (56) et coopérant avec ledit corps (43) de support d'image pour transférer une image maintenue par ledit corps (43) de support d'image sur ladite feuille (56).
